Europäisches Patentamt

European Patent Office

Office européen des brevets

(19)

(11) Veröffentlichungsnummer : **0 370 346 B1**

(12) **EUROPÄISCHE PATENTSCHRIFT**

(45) Veröffentlichungstag der Patentschrift :
**07.01.93 Patentblatt 93/01**

(51) Int. Cl.$^5$ : **C08L 51/04,** C08L 51/08,
C08L 25/02, C08L 33/12

(21) Anmeldenummer : **89120976.9**

(22) Anmeldetag : **11.11.89**

(54) **Polymermischungen mit guter Alterungsbeständigkeit.**

(30) Priorität : **24.11.88 DE 3839585**

(43) Veröffentlichungstag der Anmeldung :
**30.05.90 Patentblatt 90/22**

(45) Bekanntmachung des Hinweises auf die
Patenterteilung :
**07.01.93 Patentblatt 93/01**

(84) Benannte Vertragsstaaten :
**DE ES FR GB IT NL**

(56) Entgegenhaltungen :
**EP-A- 0 154 244
EP-A- 0 249 964
EP-A- 0 260 552
DE-A- 2 547 508
JP-A-47 030 751**

(73) Patentinhaber : **BAYER AG
W-5090 Leverkusen 1 Bayerwerk (DE)**

(72) Erfinder : **Eichenauer, Herbert, Dr.
Gustav-Heinemann-Strasse 3
W-4047 Dormagen 1 (DE)**
Erfinder : **Pischtschan, Alfred, Dr.
Zur Eiche 33
W-5067 Kürten (DE)**
Erfinder : **Lindner, Christian, Dr.
Im Wasserblech 11
W-5000 Köln 91 (DE)**

## Beschreibung

Die Erfindung betrifft Polymerlegierungen mit guter Witterungs- und Alterungsbeständigkeit, guter Verarbeitbarkeit und hoher Zähigkeit bei tiefer Temperatur.

Polymerlegierungen mit guter Alterungsbeständigkeit sind bekannt, z.B. Pfropfpolymerisate auf Basis von vernetzten Acrylatkautschuken in Kombination mit einem thermoplastischen Harz, sogenannte ASA-Polymere (vgl. z.B. DE-AS 1 260 135, DE-OS 1 911 882, DE-OS 2 826 925, EP-A 71 098) und Pfropfpolymerisate auf Basis von Ethylen/Propylen/Dien-Kautschuken (EPDM-Kautschuke) in Kombination mit einem thermoplastischen Harz, sogenannte AES-Polymere (vgl. z.B. DE-OS 2 830 232, DE-OS 3 001 766, EP-A 121 327, EP-A 134 154).

Während sowohl ASA- als auch AES-Polymere gute Zähigkeiten bei Zimmertemperatur aufweisen, fällt die Zähigkeit mit sinkender Temperatur schnell ab und führt letztlich bei Temperaturen zwischen ca. 0°C und -40°C zum Sprödbruch.

Es wurde gefunden, daß thermoplastische Polymerlegierungen mit sehr guter Witterungsbeständigkeit bei gleichzeitig hoher Zähigkeit bei tiefer Temperatur erhalten werden, wenn ASA-Systeme mit spezieller Teilchengröße der Kautschukphase mit Pfropfprodukten auf Basis von Silikonkautschuk mit spezieller Teilchengröße kombiniert werden. Die dabei resultierenden Polymerlegierungen zeichnen sich außerdem durch eine verbesserte thermoplastische Verarbeitbarkeit aus.

Gegenstand der vorliegenden Erfindung sind thermoplastische Formmassen aus A) 5 bis 95 Gew.-%, vorzugsweise 20 bis 80 Gew.-%, eines Pfropfproduktes eines Gemisches von 50 bis 100 Gew.-Teilen, vorzugsweise 60 bis 95 Gew.-Teilen, Styrol, $\alpha$-Methylstyrol, Vinyltoluol, vorzugsweise p-Methylstyrol, Methylmethacrylat oder Mischungen daraus und 0 bis 50 Gew.-Teilen, vorzugsweise 5 bis 40 Gew.-Teilen, Acrylnitril auf einen teilchenförmigen Silikonkautschuk mit einem mittleren Teilchendurchmesser ($d_{50}$) von 0,10 bis 0.50 $\mu$m, vorzugsweise von 0,10 bis 0,15 $\mu$m oder von 0,25 bis 0,50 $\mu$m, mit einem Gesamtkautschukgehalt von 30 bis 90 Gew.-%, vorzugsweise von 40 bis 80 Gew.-% und B) 95 bis 5 Gew.-%, vorzugsweise 80 bis 20 Gew.-%, eines Pfropfproduktes eines Gemisches von 50 bis 100 Gew.-Teilen, vorzugsweise 60 bis 95 Gew.-Teilen, Styrol, $\alpha$-Methylstyrol, Vinyltoluol, vorzugsweise p-Methylstyrol, Methylmethacrylat oder Mischungen daraus und 0 bis 50 Gew.-Teilen, vorzugsweise 5 bis 40 Gew.-Teilen, Acrylnitril auf einen teilchenförmigen Acrylat-Kautschuk mit einem mittleren Teilchendurchmesser ($d_{50}$) von 0,05 bis 1,00 $\mu$m, vorzugsweise von 0,08 bis 0,15 $\mu$m oder von 0,30 bis 0,60 $\mu$m, mit einem Gesamtkautschukgehalt von 30 bis 80 Gew.-%, vorzugsweise von 40 bis 75 Gew.-%.

Die zur Erzeugung der erfindungsgemäßen Formmassen verwendbaren Pfropfprodukte Silikonkautschuk (A) werden erhalten, indem Vinylmonomere oder Vinylmonomerengemische in Gegenwart von Silikonkautschuk, insbesondere in Gegenwart von in Emulsionsform vorliegendem Silikonkautschuk radikalisch polymerisiert werden, wobei zumindest ein Teil der Monomeren auf den Kautschuk aufgepfropft wird (Pfropfpolymerisation). Geeignete Vinylmonomere sind beispielsweise Styrol, kern- oder seitenkettensubstituierte Styrole, insbesondere p-Methylstyrol und $\alpha$-Methylstyrol, halogensubstituierte Styrole, z.B. Chlor- oder Bromstyrol, Vinylnaphthalin, Derivate von $\alpha$, $\beta$-ungesättigten Mono-oder Dicarbonsäuren, so insbesondere $C_{1-5}$-Alkylester von Acrylsäure oder Methacrylsäure, vorzugsweise Methylmethacrylat, oder die Nitrile von Acrylsäure oder Methycrylsäure, Maleinsäureanhydrid, N-Phenylmaleinimid oder Mischungen daraus.

Bevorzugtes Monomerengemisch ist eine Kombination aus Styrol und/oder $\alpha$-Methylstyrol und Acrylnitril, vorzugsweise im Gewichtsverhältnis Styrol und/oder $\alpha$-Methylstyrol : Acrylnitril = 1 : 1 bis 10 : 1.

Geeignete Silikonkautschuke sind beispielsweise die in DE-OS 3629763 beschriebenen Verbindungen, die im wesentlichen aus chemisch verbundenen Siloxan-Gruppen der Formeln $R_2SiO$, $RSiO_{3/2}$, $R_2R^3SiO_{1/2}$, $SiO_{4/2}$, $R^1CH=CH-(R^2)-$ und $H-S-$ mit R = einwertiger, gesättigter Kohlenwasserstoffrest, insbesondere $CH_3$, Phenyl, $C_2H_5$, gegebenenfalls durch SH, Halogen, $C_{1-6}$-Oxyalkyl substituiert, $R^1$ = H, $C_{1-6}$-Alkyl insbesondere H, $CH_3$, $R^2$ = Einfachbindung, $C_{1-4}$-Alkylen, insbesondere $-CH_2-$, $-C_2H_4-$, Einfachbindung, $R^3$ = R oder OH aufgebaut sind, wobei bevorzugt auf 100 Mol-Einheiten der Formel $R_2SiO$ 0 bis 0,5 Mol-Einheiten $R_2R^3SiO_{1/2}$, 0 bis 10 Mol-Einheiten der Formel $RSiO_{3/2}$ und 0 bis 3 Mol-Einheiten der Formel $SiO_{4/2}$ vorhanden sind.

Weitere geeignete Silikonkautschuke haben Kern/Mantel-Aufbau; Beispiele sind teilchenförmige Silikonkautschuke, die von einem Mantel aus vernetztem Acrylatkautschuk umhüllt sind (vgl. DE-OS 3617267) oder teilchenförmige Silikonkautschuke, die einen Kern aus vernetztem Acrylatkautschuk (vgl. DE-OS 3720475) oder aus einem Styrol/Acrylnitril-Copolymerisat (vgl. DE-OS 3720476) enthalten. Bevorzugt werden die Pfropfprodukte auf Basis von Silikonkautschuken (A) durch Emulsionspolymerisation hergestellt, wobei in Emulsionsform vorliegende, zumindest teilweise vernetzte Silikonkautschuke als Pfropfgrundlage eingesetzt werden.

Die Pfropfpolymerisation ist nach bekannten Methoden möglich, vorzugsweise wird sie bei Temperaturen von 30°C bis 100°C unter Verwendung radikalischer Initiatoren, beispielsweise organischer oder anorganischer Peroxide, anorganischer Persulfate, z.B. Kaliumpersulfat, Azoinitiatoren, z.B. Azobisisobutyronitril, sowie Redox-Systemen, die aus einem Oxidationsmittel, vorzugsweise einem Peroxid, und einem Reduktionsmittel bestehen, und gegebenenfalls unter Zusatz von wässriger Emulgatorlösung (z.B. anionische oder nichtionische Emulgatorkomponenten, vorzugsweise Natrium-, Kalium- oder Ammoniumsalze langkettiger Carbonsäuren mit 10 bis 20 C-Atomen, z.B. Kaliumoleat, Alkylsulfate mit 10 bis 20 C-Atomen, Alkylsulfonate mit 10 bis 20 C-Atomen oder Alkali- bzw. Ammoniumsalze der disproportionierten Abietinsäure) durchgeführt. Dabei kann diskontinuierlich (Batch- oder Semi-Batch-Verfahren), kontinuierlich oder in sonstiger Weise (z.B. Zulaufverfahren) polymerisiert werden.

Außer durch Emulsionspolymerisation ist die Herstellung der Pfropfprodukte prinzipiell auch durch Suspensions-, Lösungs- oder Massepolymerisation sowie Kombination dieser Verfahren in an sich bekannter Weise möglich.

Die Pfropfprodukte auf Basis von Silikonkautschuken weisen einen Kautschukgehalt von 30 bis 90 Gew.-%, vorzugsweise von 40 bis 80 Gew.-%, auf. Die mittleren Teilchen durchmesser ($d_{50}$-Werte) der Silikonkautschuke betragen 0,10 bis 0,50 $\mu$m, vorzugsweise 0,10 bis 0,15 $\mu$m und 0,25 und 0,50 $\mu$m.

Die zur Erzeugung der erfindungsgemäßen Formmassen verwendeten Pfropfprodukte auf Basis von Acrylatkautschuk (B) werden erhalten, indem Vinylmonomere oder Vinylmonomerengemische in Gegenwart von Acrylatkautschuk radikalisch polymerisiert werden, wobei zumindest ein Teil der Monomeren auf den Kautschuk polymerisiert wird.

Geeignete Vinylmonomere sind beispielsweise Styrol, $\alpha$-Methylstyrol, kernsubstituierte Styrole wie p-Methylstyrol, $C_{1-5}$-Alkylester von Acrylsäure oder Methacrylsäure, vorzugsweise Methylmethacrylat, Maleinsäureanhydrid, N-Phenylmaleinimid oder Mischungen daraus.

Bevorzugtes Monomerengemisch ist eine Kombination aus Styrol und/oder $\alpha$-Methylstyrol und Acrylnitril, vorzugsweise im Gewichtsverhältnis ($\alpha$-Methyl)Styrol:Acrylnitril = 1:1 bis 10:1.

Geeignete Acrylatkautschuke sind z.B. Polymerisate auf Basis von Acrylsäue-$C_1$-$C_5$-alkylester (z.B. Methyl-, Butyl-, Octyl- oder 2-Ethylhexylester der Acrylsäure) gegebenenfalls in Mischung mit bis zu 40 Gew.-% anderen Vinylmonomeren. Zur Vernetzung der Acrylatkautschuke werden polyfunktionelle Monomere copolymerisiert. Beispiele sind:

Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugsweise 8 bis 30 Kohlenstoffatome im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallylphosphat und 1,3,5-Triacryloylhexahydro-s-triazin. Besonders bevorzugte polyfunktionelle Monomere sind Triallylcyanurat, Triallylisocyanurat, Triallylphosphat, Allylmethacrylat, Ethylenglykoldimethacrylat und 1,3,5-Triacryloylhexahydro-s-triazin.

Die Menge der zur Vernetzung benutzten polyfunktionellen Monomeren ist bevorzugt 0,05 bis 10 Gew.-%, insbesondere 0,1 bis 5,0 Gew.-% (bezogen auf Gesamtmenge vernetzten Acrylatkautschuk). Weitere geeignete Acrylatkautschukkomponenten sind Verbindungen vom sogenannten Kern/Mantel-Typ, so beispielsweise teilchenförmige Acrylatkautschuke, die einen Kern aus vernetztem Polybutadien (vgl. EP-PS 34748) enthalten. Die bevorzugte Herstellung der Pfropfprodukte auf Basis von Acrylatkautschuken erfolgt durch Emulsionspolymerisation, wobei in Emulsionsform vorliegende, zumindest teilweise vernetzte Acrylatkautschuke als Pfropfgrundlage eingesetzt werden.

Die Pfropfpolymerisation ist nach bekannten Methoden möglich, vorzugsweise wird sie bei Temperaturen von 30°C bis 100°C unter Verwendung radikalischer Initiatoren beispielsweise organischer oder anorganischer Peroxide, anorganischer Persulfate, z.B. Kaliumpersulfat, Azoinitiatoren, z.B. Azobisisobutyronitril, sowie Redox-Systemen, die aus einem Oxidationsmittel, vorzugsweise einem Peroxid, und einem Reduktionsmittel bestehen, und gegebenenfalls unter Zusatz von wässriger Emulgatorlösung (z.B. anionische oder nichtionische Emulgatorkomponenten, vorzugsweise Natrium-, Kalium- oder Ammoniumsalze langkettiger Carbonsäuren mit 10 bis 20 C-Atomen, z.B. Kaliumoleat, Alkylsulfate mit 10 bis 20 C-Atomen, Alkylsulfonate mit 10 bis 20 C-Atomen oder Alkali- bzw. Ammoniumsalze der disproportionierten Abietinsäure) durchgeführt. Dabei kann die Reaktion diskontinuierlich (Batch- oder Semi-Batch-Verfahren), kontinuierlich oder in sonstiger Weise (z.B. Zulaufverfahren) durchgeführt werden.

Außer durch Emulsionspolymerisation ist die Herstellung der Pfropfprodukte prinzipiell auch durch Suspensions-, Lösungs- oder Massepolymerisation sowie Kombinationen dieser Verfahren in an sich bekannter Weise möglich.

Die Propfprodukte auf Basis von Acrylatkautschuken weisen einen Kautschukgehalt von 30 bis 80 Gew.-%, vorzugsweise von 40 bis 75 Gew.-% auf. Die mittleren Teilchendurchmesser ($d_{50}$-Werte) des Acrylatkau-

tschuks betragen 0,05 bis 1,00 μm, vorzugsweise 0,08 bis 0,15 μm oder 0,30 bis 0,60 μm.

Besonders vorteilhafte Eigenschaften, insbesondere hohe Zähigkeit, vorzugsweise bei tiefer Temperatur und gleichzeitig gute thermoplastische Verarbeitbarkeit, werden erreicht, wenn Pfropfprodukte mit ausgewählten Teilchengrößen miteinander kombiniert werden und zwar entweder

1. Pfropfprodukte auf Basis von Silikonkautschuk (A) mit mittleren Teilchendurchmessern von 0,25 bis 0,50 μm mit Pfropfprodukten auf Basis von Acrylatkautschuk (B) mit mittleren Teilchendurchmessern von 0,08 bis 0,15 μm

oder

2. Propfprodukte auf Basis von Silikonkautschuk (A) mit mittleren Teilchendurchmessern von 0,10 bis 0,15 μm mit Pfropfprodukten auf Basis von Acrylatkautschuk (B) mit mittleren Teilchendurchmessern von 0,30 bis 0,60 μm.

Die erfindungsgemäßen Formmassen können erzeugt werden, indem man ihre Bestandteile A) und B) miteinander bei höheren Temperaturen, insbesondere bei 100°C bis 280°C, z.B. in Knetern, auf Walzenstühlen oder Schneckenmaschinen mischt. Fallen A) und B) als Suspensionen, Lösungen oder Emulsionen an, so kann man diese mischen und gemeinsam aufarbeiten.

Den Formmassen können übliche Additive wie Antioxidantien, Gleitmittel, Flammschutzmittel, Füllstoffe, Pigmente, Antistatika in üblichen Mengen zugesetzt werden.

Die erfindungsgemäßen Mischungen sind alterungsbeständige thermoplastische Formmassen mit sehr guter Zähigkeit bei tiefen Temperaturen und guter Verarbeitbarkeit bei Verarbeitung durch Extrusion, Kalandrierung und Spritzguß.

Sie können zu alterungsbeständigen Formkörpern verarbeitet werden, sind jedoch auch als Modifikatoren für andere Kunststoffe geeignet, insbesondere für spröde Vinylmonomerharze wie Styrol/Acrylnitril-Copolymerisate (SAN-Harze), $\alpha$-Methylstyrol/Acrylnitril-Copolymerisate, Polystyrol, Polymethylmethacrylat, Polyvinylchlorid.

Dabei beträgt ihre Menge im allgemeinen 5 bis 80 Gew.-%, vorzugsweise 10 bis 70 Gew.-%, bezogen auf das gesamte modifizierte Produkt.

Eine besonders bevorzugte Mischung dieser Art besteht aus 5 bis 80 Gew.-%, bevorzugt 10 bis 70 Gew.-%, der erfindungsgemäßen Mischung und 95 bis 20 Gew.-%, bevorzugt 90 bis 30 Gew.-%, eines thermoplastischen Harzes aus 5 bis 40 Gew.-Teilen Acrylnitril und 95 bis 60 Gew.-Teilen Styrol, $\alpha$-Methylstyrol, p-Methylstyrol, Methylmethacrylat oder Mischungen daraus. Diese Harze sind bekannt. Sie werden häufig als SAN-Harze bezeichnet. Man kann sie mit dem Gemisch der Pfropfpolymerisate vereinigen, indem man sie beim Vermischen der Pfropfpolymerisate zugibt.

Dabei müssen die Harze in der gleichen physikalischen Form (Feststoff, Latex, Lösung) vorliegen wie die Pfropfpolymerisate. Man kann auch feste Harze auf Innenmischern und Extrudern mit fertigen Mischungen der Pfropfpolymerisate oder nacheinander mit den beiden Pfropfpolymerisat-Komponenten mischen.

Teilchengröße bedeutet immer mittlerer Teilchendurchmesser $d_{50}$, ermittelt durch Ultrazentrifugenmessungen nach W. Scholtan et al., Kolloid-Z. u. Z. Polymere 250 (1972), 782 - 796.

Beispiele und Vergleichsbeispiele

A) Pfropfprodukt auf Basis eines Silikonkautschuks mit mittlerem Teilchendurchmesser ($d_{50}$) von 135 nm.

Herstellung der Silikonkautschukemulsion:

38,4 Gew.-Teile Octamethylcyclotetrasiloxan, 1,2 Gew.-Teile Tetramethyltetravinylcyclotetrasiloxan und 1 Gew.-Teil $\gamma$-Mercaptopropylmethyldimethoxysilan werden miteinander verrührt. 1,00 Gew.-Teile Dodecylbenzolsulfonsäure werden zugeführt und anschließend 58,4 Gew.-Teile Wasser innerhalb 1 Stunde zugegeben, wobei intensiv gerührt wird. Die Voremulsion wird mit Hilfe einer Hochdruckemulgiermaschine 2 x bei ca. 220 bar homogenisiert. Danach werden weitere 0,5 Gew.-Teile Dodecylbenzolsulfonsäure hinzugeben. Die Emulsion wird 2 Stunden bei 85°C und anschließend 36 Stunden bei Raumtemperatur gerührt und dann mit 5 n NaOH neutralisiert. Es resultiert eine stabile Emulsion mit einem Feststoffgehalt von ca. 36 %; der mittlere Teilchendurchmesser ($d_{50}$) beträgt 135 nm.

Pfropfreaktion: In einem Reaktor werden vorgelegt:

2107 Gew.-Teile des oben beschriebenen Latex

1073 Gew.-Teile Wasser

Nach Initiierung mittels einer Lösung von 7,5 Gew.-Teilen Kaliumperoxodisulfat in 195 Gew.-Teilen Wasser bei 65°C werden folgende Lösungen innerhalb von 4 Stunden gleichmäßig in den Reaktor eingespeist:

Lösung 1:     540 Gew.-Teile Styrol

210 Gew.-Teile Acrylnitril

Lösung 2: 375 Gew.-Teile Wasser

15 Gew.-Teile Natriumsalz von $C_{14}$-$C_{18}$-Alkylsulfonsäuren

Anschließend wird innerhalb von 4 Stunden bei 65°C auspolymerisiert. Es resultiert ein Latex mit einem Feststoffgehalt von ca. 33 Gew.-%. Nach Koagulation mit einer wäßrigen Magnesiumchlorid/Essigsäure-Lösung, Filtration und Trocknung im Vakuum wird das Pfropfprodukt in Form eines weißen Pulvers erhalten.

B) Pfropfprodukt auf Basis eines Silikonkautschuks eines mittleren Teichendurchmessers ($d_{50}$) von 320 nm.

Die Silikonkautschukemulsion wurde wie unter (A) beschrieben hergestellt, jedoch unter Verwendung von 0,90 Gew.-Teilen Dodecylbenzolsulfonsäure und bei einem Druck im Homogenisierungsschritt von ca. 190 bar. Pfropfpolymerisiert wird wie unter (A) beschrieben.

C) Pfropfprodukt auf Basis eines Kern/Schalen-Silikonkautschuks mit einer mittleren Teilchengröße ($d_{50}$) von 325 nm. Die Herstellung erfolgte über folgende Stufen:

C.1 Silikonemulsion

38,4 Gew.-Teile Octamethylcyclotetrasiloxan, 1,2 Gew.-Teile Tetramethyltetravinylcyclotetrasiloxan und 0,2 Gew.-Teile Tetraethoxysilan werden miteinander verrührt.

0,5 Gew.-Teile Dodecylbenzolsulfonsäure werden zugeführt, anschließend 70 Gew.-Teile Wasser innerhalb 1 Stunde zugegeben. Dabei wird intensiv gerührt. Die Voremulsion wird mit Hilfe einer Hochdruckemulgiermaschine 2 x bei ca. 220 bar homogenisiert. Danach werden weitere 0,5 Gew.-Teile Dodecylbenzolsulfonsäure hinzugegeben. Die Emulsion wird 2 Stunden bei 85°C und anschließend 36 Stunden bei Raumtemperatur gerührt. Neutralisation erfolgt unter Verwendung von 5 n NaOH. Es resultiert eine stabile Emulsion mit einem Feststoffgehalt von ca. 36 %.

C.2 Mit Acrylatkautschuk umhüllter Silikonkautschuk

In einem Reaktor werden vorgelegt:

2500 Gew.-Teile des unter C.1 beschriebenen Latex 228 Gew.-Teile Wasser.

Bei 70°C gibt man eine Lösung von 3 Gew.-Teilen Kaliumperoxodisulfat in 100 Gew.-Teile Wasser in den Reaktor ein. Anschließend werden folgende Lösungen innerhalb von 5 Stunden bei 70°C in den Reaktor eindosiert:

Lösung 1: 387 Gew.-Teile n-Butylacrylat

1 Gew.-Teile Triallylcyanurat

Lösung 2: 500 Gew.-Teile Wasser

10 Gew.-Teile Natriumsalz von $C_{14}$-$C_{18}$-Alkylsulfonsäuren

Danach wird die Polymerisation innerhalb 4 Stunden bei 70°C zu Ende geführt. Der gebildete Latex enthält das Polymerisat in einer Konzentration von 35 Gew.-%. Das Polymer besteht aus 70 Gew.-% Silikonkautschuk und 30 Gew.-% Acrylatkautschuk.

C.3 Pfropfprodukt

In einem Reaktor werden vorgelegt:

3700 Gew.-Teile des unter C.2 beschriebenen Latex

770 Gew.-Teile Wasser.

Nach Initiierung mit einer Lösung von 3,5 Gew.-Teilen Kaliumperoxodisulfat in 150 Gew.-Teile Wasser bei 70°C werden folgende Lösungen in den Reaktor innerhalb von 5 Stunden gleichmäßig eingespeist:

Lösung 1: 455 Gew.-Teile Methylmethacrylat

400 Gew.-Teile Styrol

Lösung 2: 1000 Gew.-Teile Wasser

30 Gew.-Teile Natriumsalz von $C_{14}$-$C_{18}$-Alkylsulfonsäuren

Anschließend polymerisiert man innerhalb von 4 Stunden bei 70°C-75°C aus. Es resultiert ein Latex mit einem Feststoffgehalt von ca. 33 Gew.-%.

D) Pfropfprodukt auf Basis eines Acrylatkautschuks (mittlerer Teilchendurchmesser) ($d_{50}$) ca. 100 nm.

99,5 Gew.-Teile Acrylsäure-n-butylester und 0,5 Gew.-Teile Triallylcyanurat werden innerhalb von 4 Stunden zu einer Lösung von 3 Gewichtsteilen des Natriumsalzes von $C_9$-$C_{18}$-Alkyl-sulfonsäuren und 0,75 Gewichtsteilen Kaliumpersulfat in 150 Gewichtsteilen Wasser dosiert, wobei die Temperatur auf 65°C eingestellt wird. Nach einer Nachreaktionszeit von 2 Stunden bei 65°C wird ein 40 %iger Latex mit einem mittleren Teilchendurchmesser ($d_{50}$) von ca. 100 nm erhalten.

4334 Gew.-Teile dieses Polybutylacrylatlatex werden auf 64°C erwärmt und mit einer Lösung von 14,5 Gew.-Teilen $K_2S_2O_8$ in 2635 Gew.-Teilen Wasser versetzt. Danach werden unter Rühren innerhalb von 4 Stunden parallel zudosiert:

835,2 Gew.-Teile Styrol
324,8 Gew.-Teile Acrylnitril
783,0 Gew.-Teile einer 7,4 %igen Lösung von $C_9$-$C_{18}$-Alkylsulfonsäure-Natriumsalz in Wasser

Nach einer Nachrührzeit von 2 Stunden wird ein Pfropflatex mit einem Feststoffgehalt von 33 % erhalten, der durch Koagulation mit einer wäßrigen Magnesiumsulfat/Essigsäurelösung, Filtration und Trocknung im Vakuum in das Pfropfprodukt in Form eines weißen Pulvers überführt wird.

E) Pfropfprodukt auf Basis eines Kern/Mantel-Acrylatkautschuks mit einem mittleren Teilchendurchmesser ($d_{50}$) von ca. 480 nm.

Zu 22,44 Gew.-Teilen eines Polybutadienlatex mit einem Feststoffgehalt von 40,1 % und einem mittleren Teilchendurchmesser ($d_{50}$) von 100 nm werden 7,5 Gew.-Teile Kaliumpersulfat (gelöst in 2400 Gew.-Teilen Wasser) gegeben, wonach innerhalb von 5 Stunden bei 65°C parallel zudosiert werden:

a) 22,5 Gew.-Teile Natriumsalz von $C_9$-$C_{18}$-Alkylsulfonsäuren (gelöst in 375 Gew.-Teilen Wasser)
b) 1500 Gew.-Teile n-Butylacrylat und 1,5 Gew.-Teile Triallylcyanurat

Nach einer Nachreaktionszeit von 4 Stunden bei 65°C wird ein Kern/Mantel-Acrylatkautschuk mit einem Feststoffgehalt von 35 % und einer mittleren Teilchengröße ($d_{50}$) von 480 nm erhalten.

4953 Gew.-Teile dieses Kern/Mantel-Kautschuk-Latex werden auf 63°C erwärmt und mit einer Lösung von 14,5 Gew.-Teilen Kaliumperoxidisulfat in 2016 Gew.-Teilen Wasser versetzt. Danach wird unter Rühren innerhalb von 4 Stunden parallel zudosiert:

835,2 Gew.-Teile Styrol
324,8 Gew.-Teile Acrylnitril
783,0 Gew.-Teile einer 7,4 %igen Lösung von $C_9$-$C_{18}$-Alkylsulfonsäuren-Natriumsalz in Wasser

Nach einer Nachreaktionszeit von 2 Stunden wird ein Pfropflatex mit einem Feststoffgehalt von 33 % erhalten, der durch Koagulation mit einer wäßrigen Magnesiumsulfat/Essigsäurelösung, Filtration und Trocknung im Vakuum in das Pfropfprodukt in Form eines weißen Pulvers überführt wird.

F) Styrol/Acrylnitril = 72 : 28-Copolymerisat mit einem $\overline{M}w$ von ca. 115000 und einem $\overline{M}w/\overline{M}n-1 \leqq 2,0$

G) α-Methylstyrol/Acrylnitril = 72 : 28-Copolymerisat mit einem $\overline{M}w$ von ca. 75000 und einem $\overline{M}w/\overline{M}n-1 \leqq 2,0$

Die in Tabelle 1 angegebenen Gewichtsmengen der Komponenten A bis G wurden in einem Innenkneter mit 2 Gewichtsteilen Pentaerythrittetrastearat und 0,1 Gewichtsteilen eines Silikonöls bei ca. 200°C vermischt, wonach das resultierende Gemisch granuliert und anschließend durch Spritzgießen bei 240°C verarbeitet wurde (75 Sekunden-Zyklus). Die Messung von Schlagzähigkeit bei -40°C und Kerbschlagzähigkeit (Raumtemperatur und -40°C) erfolgte nach DIN 53453 (Einheit: $kJ/m^2$, Wärmeformbeständigkeit (Vicat B) wurde nach DIN 53460 (Einheit: °C) ermittelt. Die Beurteilung der Fließfähigkeit erfolgte durch Messung des MVI-Wertes nach DIN 53735 U (Einheit: $cm^3$/10 min).

Die Prüfdaten der Formmassen sind in Tabelle 2 zusammengestellt.

Tabelle 1: Zusammensetzungen der Formmassen

| Form-masse | Gew.-Teile | | | | | | |
|---|---|---|---|---|---|---|---|
| | A | B | C | D | E | F | G |
| 1 | 22,5 | - | - | 18,75 | - | 58,75 | - |
| 2 | - | 22,5 | - | 18,75 | - | 58,75 | - |
| 3 | 22,5 | - | - | - | 18,75 | 58,75 | - |
| 4 | - | 22,5 | - | - | 18,75 | 58,75 | - |
| 5 | - | - | 20 | 16,75 | - | - | 63,25 |
| 6 | - | 20 | - | - | 16,75 | - | 63,25 |
| 7 (Vergl.) | - | 45 | - | - | - | 55 | - |
| 8 (Vergl.) | - | - | - | - | 37,5 | 62,5 | - |
| 9 (Vergl.) | - | 40 | - | - | - | - | 60 |
| 10 (Vergl.) | - | - | - | - | 33,5 | - | 66,5 |

## Tabelle 2: Physikalische Daten der Formmassen

| Form- masse | 20° C ak | -40° C ak | -40° C an | Vicat B | MVI |
|---|---|---|---|---|---|
| 1 | 14,3 | 6,9 | 99,3 | 98 | 4,2 |
| 2 | 15,8 | 8,8 | 79,0 | 99 | 4,8 |
| 3 | 16,1 | 9,2 | 108,4 | 98 | 5,6 |
| 4 | 15,2 | 7,6 | 51,8 | 98 | 5,2 |
| 5 | 13,7 | 7,1 | 88,0 | 104 | 2,3 |
| 6 | 11,8 | 5,2 | 81,7 | 105 | 3,8 |
| 7 (Vergl.) | 15,4 | 10,6 | 96,5 | 96 | 2,2 |
| 8 (Vergl.) | 5,6 | 2,5 | 48,0 | 102 | 8,1 |
| 9 (Vergl.) | 13,8 | 5,0 | 75,1 | 105 | 0,6 |
| 10 (Vergl.) | 4,8 | 2,7 | 48,3 | 108 | 2,6 |

$a_k$ = Kerbschlagzähigkeit

$a_n$ = Schlagzähigkeit

## Patentansprüche

1. Formmassen aus
   A) 5 bis 95 Gew.-% eines Pfropfproduktes eines Gemisches von 50 bis 100 Gew.-Teilen Styrol, α-Methylstyrol, Vinyltoluol, Methylmethacrylat oder Mischungen daraus und 0 bis 50 Gew.-Teilen Acrylnitril auf einen teilchenförmigen Silikonkautschuk mit einem mittleren Teilchendurchmesser ($d_{50}$) von 0,10 bis 0,50 μm mit einem Gesamtkautschukgehalt von 30 bis 90 Gew.-% und
   B) 95 bis 5 Gew.-% eines Pfropfproduktes eines Gemisches von 50 bis 100 Gew.-Teilen Styrol, α-Methylstyrol, Vinyltoluol, Methylmethacrylat oder Mischungen daraus und 0 bis 50 Gew.-Teilen Acrylnitril auf einen teilchenförmigen Acrylatkautschuk mit einem mittleren Teilchendurchmesser ($d_{50}$) von 0,05 bis 1,00 μm mit einem Gesamtkautschukgehalt von 30 bis 80 Gew.-%.

2. Formmassen aus
   A) 20 bis 80 Gew.-% eines Pfropfproduktes eines Gemisches von 60 bis 95 Gew.-Teilen Styrol, α-Methylstyrol, Vinyltoluol, Methylmethacrylat oder Mischungen daraus und 5 bis 40 Gew.-Teilen Acrylnitril auf einen teilchenförmigen Silikonkautschuk mit einem mittleren Teilchendurchmesser ($d_{50}$) von 0,10 bis 0,15 μm oder von 0,25 bis 0,50 μm mit einem Gesamtkautschukgehalt von 40 bis 80 Gew.-% und
   B) 80 bis 20 Gew.-% eines Pfropfproduktes eines Gemisches von 60 bis 95 Gew.-Teilen Styrol, α-Methylstyrol, Vinyltoluol, Methylmethacrylat oder Mischungen daraus und 5 bis 40 Gew.-Teilen Acrylnitril auf einen teilchenförmigen Acrylatkautschuk mit einem mittleren Teilchendurchmesser ($d_{50}$) von 0,08 bis 0,15 μm oder von 0,30 bis 0,60 μm mit einem Gesamtkautschukgehalt von 40 bis 75 Gew.-%.

3. Verwendung der Formmassen gemäß Anspruch 1 und 2, gegebenenfalls in Abmischung mit spröden thermoplastischen Vinylmonomerharzen, als thermoplastische Formmassen.

8

**4.** Formmassen nach Anspruch 1, enthaltend 5 bis 80 Gew.-% der Formmasse gemäß Anspruch 1 und 95 bis 20 Gew.-% eines thermoplastischen Harzes aus 5 bis 40 Gew.-Teilen Acrylnitril und 95 bis 60 Gew.-Teilen Styrol, α-Methylstyrol, p-Methylstyrol, Methylmethacrylat oder Mischungen daraus.

## Claims

**1.** Moulding compounds of
A) 5 to 95% by weight of a graft product of a mixture of 50 to 100 parts by weight styrene, α-methyl styrene, vinyl toluene, methyl methacrylate or mixtures thereof and 0 to 50 parts by weight acrylonitrile on a particulate silicone rubber with a mean particle diameter ($d_{50}$) of from 0.10 to 0.50 μm having a total rubber content of from 30 to 90% by weight and
B) 95 to 5% by weight of a graft product of a mixture of 50 to 100 parts by weight styrene, α-methyl styrene, vinyl toluene, methyl methacrylate or mixtures thereof and 0 to 50 parts by weight acrylonitrile on a particulate acrylate rubber with a mean particle diameter ($d_{50}$) of from 0.05 to 1.00 μm having a total rubber content of from 30 to 80% by weight.

**2.** Moulding compounds of
A) 20 to 80% by weight of a graft product of a mixture of 60 to 95 parts by weight styrene, α-methyl styrene, vinyl toluene, methyl methacrylate or mixtures thereof and 5 to 40 parts by weight acrylonitrile on a particulate silicone rubber with a mean particle diameter ($d_{50}$) of from 0.10 to 0.15 μm or from 0.25 to 0.50 μm having a total rubber content of 40 to 80% by weight and
B) 80 to 20% by weight of a graft product of a mixture of 60 to 95 parts by weight styrene, α-methyl styrene, vinyl toluene, methyl methacrylate or mixtures thereof and 5 to 40 parts by weight acrylonitrile on a particulate acrylate rubber with a mean particle diameter ($d_{50}$) of from 0.08 to 0.15 μm or from 0.30 to 0.60 μm having a total rubber content of 40 to 75% by weight.

**3.** The use of the moulding compounds claimed in claims 1 and 2, optionally in admixture with brittle thermoplastic vinyl monomer resins, as thermoplastic moulding compounds.

**4.** Moulding compounds as claimed in claim 1, containing from 5 to 80% by weight of the moulding compound claimed in claim 1 and from 95 to 20% by weight of a thermoplastic resin of 5 to 40 parts by weight acrylonitrile and 95 to 60 parts by weight styrene, α-methyl styrene, p-methyl styrene, methyl methacrylate or mixtures thereof.

## Revendications

**1.** Matières moulables composées de
A) 5 à 95 % en poids d'un produit greffé d'un mélange de 50 à 100 parties en poids de styrène, d'α-méthylstyrène, de vinyltoluène, de méthacrylate de méthyle ou de leurs mélanges et de 0 à 50 parties en poids d'acrylonitrile sur un caoutchouc de silicone particulaire ayant des particules de diamètre moyen ($d_{50}$) compris entre 0,10 et 0,50μm, pour une teneur totale en caoutchouc de 30 à 90 % en poids et
B) 95 à 5 % en poids d'un produit greffé d'un mélange de 50 à 100 parties en poids de styrène, α-méthylstyrène, vinyltoluène, méthacrylate de méthyle ou leurs mélanges et de 0 à 50 parties en poids d'acrylonitrile sur un caoutchouc d'acrylate particulaire ayant des particules de diamètre moyen ($d_{50}$) compris entre 0,05 et 1,00 μm pour une teneur totale en caoutchouc de 30 à 80 % en poids.

**2.** Matières moulables composées de
A) 20 à 80 % en poids d'un produit greffé d'un mélange de 60 à 95 parties en poids de styrène, d'α-méthylstyrène, de vinyltoluène, de méthacrylate de méthyle ou de leurs mélanges et de 5 à 40 parties en poids d'acrylonitrile sur un caoutchouc de silicone particulaire ayant des particules de diamètre moyen ($d_{50}$) compris entre 0,10 et 0,15 μm ou entre 0,25 et 0,50 μm, pour une teneur totale en caoutchouc de 40 à 80 % en poids et
B) 80 à 20 % en poids d'un produit greffé d'un mélange de 60 à 95 parties en poids de styrène, d'α-méthylstyrène, de vinyltoluène, de méthacrylate de méthyle ou de leurs mélanges et de 5 à 40 parties en poids d'acrylonitrile sur un caoutchouc d'acrylate particulaire ayant des particules de diamètre

moyen ($d_{50}$) compris entre 0,08 et 0,15 μm ou entre 0,30 et 0,60 μm, pour une teneur totale en caoutchouc de 40 à 75 % en poids.

3. Utilisation des matières moulables selon les revendications 1 et 2, le cas échéant en mélange avec des résines de monomères vinyliques thermoplastiques fragiles, comme matières moulables thermoplastiques.

4. Matières moulables selon la revendication 1, contenant 5 à 80 % en poids de la matière moulable selon la revendication 1 et 95 à 20 % en poids d'une résine thermoplastique composée de 5 à 40 parties en poids d'acrylonitrile et de 95 à 60 parties en poids de styrène, d'α-méthylstyrène, de p-méthylstyrène, de méthacrylate de méthyle ou de leurs mélanges.